# EUROPÄISCHE PATENTSCHRIFT

(11) **EP 2 763 868 B1**
(45) Veröffentlichungstag und Bekanntmachung des Hinweises auf die Patenterteilung: **03.05.2017**
(21) Anmeldenummer: 12773267.5
(22) Anmeldetag: 26.09.2012
(51) Int. Cl.: B60L 3/00, B60L 3/04, H02H 1/00, H02H 5/10, H02H 7/08, B60L 11/12, B60L 11/00, H02H 5/04, H02H 3/14

(54) **STEUEREINHEIT FÜR EIN KRAFTFAHRZEUG**
CONTROL UNIT FOR A MOTOR VEHICLE
UNITÉ DE COMMANDE POUR VÉHICULE AUTOMOBILE

(30) Priorität: 05.10.2011 DE 102011084006
(43) Veröffentlichungstag der Anmeldung: 13.08.2014
(73) Patentinhaber: Robert Bosch GmbH, 70442 Stuttgart (DE)
(72) Erfinder: KOCH, Stefan, 77876 Kappelrodeck (DE); TIAN, Jian, 77815 Buehl (DE); BERGMANN, Ralf-Peter, 77880 Sasbach (DE); MUELLER, Stephan, 77815 Buehl (DE)
(86) Internationale Anmeldenummer: PCT/EP2012/068953
(87) Internationale Veröffentlichungsnummer: WO 2013/050281

(56) Entgegenhaltungen:
- WO-A1-2008/031669
- DE-A1-102007 022 515
- DE-A1-102008 061 585
- US-A1- 2011 049 977

## Beschreibung

### Stand der Technik

Die Erfindung betrifft eine Steuereinheit für ein Kraftfahrzeug. Die Steuereinheit weist einen Spannungswandler auf, wobei der Spannungswandler einen Eingang für ein Gleichspannungsnetz aufweist. Der Spannungswandler ist ausgebildet, eine Gleichspannung kleiner als eine Eingangsspannung am Eingang für das Gleichspannungsnetz zu erzeugen und die Gleichspannung ausgangsseitig auszugeben.

Bei aus dem Stand der Technik bekannten Bordnetzen für Elektrofahrzeuge werden Kondensatoren eines Zwischenkreises zum Versorgen eines elektrischen Antriebs des Kraftfahrzeugs mit einer Spannung von mehr als 200 Volt betrieben. Diese Spannung stellt bei einer Berührung durch einen Menschen eine Gefahr dar. Im Falle eines Unfalls wird der Zwischenkreis über einen ohmschen Widerstand entladen, sodass ein Helfer - beispielsweise beim Löschen eines Brandes des Kraftfahrzeugs - keinen elektrischen Schlag erhalten kann.

Aus der DE 10 2007 022 515 A1 ist eine Steuereinheit für ein Kraftfahrzeug bekannt, bei der eine im Zwischenkreiskondensator gespeicherte Ladung über einen Wechselrichter in Wicklungssträngen einer elektrischen Maschine abgebaut werden kann.

### Offenbarung der Erfindung

Erfindungsgemäß weist der Spannungswandler der eingangs genannten Art einen Wechselrichter und einen mit dem Wechselrichter ausgangsseitig verbundenen Transformator auf.

Der Spannungswandler weist auch einen Eingang für ein Entladesignal auf und ist ausgebildet, in Abhängigkeit des Entladesignals einen mit dem Eingang für das Gleichspannungsnetz verbundenen Zwischenkreiskondensator über dem Wechselrichter zu entladen und dazu eine Arbeitsfrequenz des Wechselrichters - insbesondere im Vergleich zu keinem Entladesignal - zu verkleinern.

Dadurch verringert sich vorteilhaft der Wechselstromwiderstand des mit dem Wechselrichter verbundenen Transformators. Der mit dem Spannungswandler verbundene Zwischenkreiskondensator kann so vorteilhaft schnell wenigstens teilweise oder vollständig - bevorzugt mindestens bis zum Erreichen eines vorbestimmten Spannungswertes - entladen werden. Zum Entladen des Zwischenkreiskondensators sind so weiter vorteilhaft keine zusätzlichen Bauteile, wie beispielsweise ohmsche Widerstände oder Schaltelemente, welche ausgebildet sind, die ohmschen Widerstände parallel zu dem Zwischenkreiskondensator zu schalten, notwendig.

Eine mit dem Zwischenkreis verbundene Batterie, insbesondere Hochvolt-Batterie, welche ausgebildet ist, elektrische Energie mit einer Spannung von wenigstens 200 Volt, bevorzugt zwischen 200 und 500 Volt zu speichern, kann weiter vorteilhaft in Abhängigkeit des Entladesignals mittels eines Trennschalters von dem Zwischenkreis und so von dem Zwischenkreiskondensator getrennt werden. So verbleibt im Zwischenkreis die in dem Zwischenkreiskondensator - und in den im Weiteren mit dem Zwischenkreis verbundenen kapazitiven Bauteilen - gespeicherte elektrische Energie. Diese im Zwischenkreis nach dem Trennen der Hochvoltbatterie von dem Zwischenkreis verbleibende elektrische Energie kann dann vorteilhaft - bevorzugt ohne zusätzliche ohmsche Widerstände - das Zwischenkreispotential mit einem Masseanschluss verbinden. So kann der Zwischenkreis über den Spannungswandler, der in einem Bordnetz eines Elektrofahrzeugs ohnehin vorhanden ist, mindestens bis zum Erreichen einer für eine beim Berühren durch einen Menschen ungefährliche Spannung - beispielsweise weniger als 60 Volt - entladen werden. Der Spannungswandler ist beispielsweise ausgangsseitig mit einem Niedervoltnetz verbunden, insbesondere einem 12 Volt- oder einem 24 Volt-Niedervoltnetz.

Unter der Bezeichnung Hochvolt wird eine bei einem Berühren durch einen Menschen gefährliche Spannung verstanden, insbesondere eine Spannung von mehr als 60 Volt.

Unter der Bezeichnung Niedervolt wird eine bei einem Berühren durch einen Menschen ungefährliche Spannung verstanden, insbesondere eine Spannung von weniger als 60 Volt.

In einer bevorzugten Ausführungsform ist die Steuereinheit, insbesondere der Spannungswandler ausgebildet, die Arbeitsfrequenz des Wechselrichters in Abhängigkeit des Entladesignals wenigstens zu halbieren. Der Zwischenkreiskondensator kann so vorteilhaft mindestens doppelt so schnell entladen werden, als ohne das Entladesignal, welches eine Verringerung der Arbeitsfrequenz des Spannungswandlers im Vergleich zu einer Arbeitsfrequenz ohne Entladesignal bewirkt.

In einer bevorzugten Ausführungsform ist der Spannungswandler ausgebildet, einen von dem Wechselrichter auf den Transformator geschalteten Strom - bevorzugt mittels begrenztem Verkleinern der Arbeitsfrequenz oder mittels pulsweitenmodulierter Ansteuerung des Wechselrichters - in Abhängigkeit eines magnetischen Flusses, bevorzugt in Abhängigkeit einer Sättigung des magnetischen Flusses in den Transformator zu begrenzen. Auf diese Weise kann der Transformator und/oder der Wechselrichter vorteilhaft nicht überhitzt werden.

In einer vorteilhaften Ausführungsform weist die Steuereinheit wenigstens einen Temperatursensor auf, welcher angeordnet und ausgebildet ist, eine Temperatur des Transformators und/oder des Wechselrichter zu erfassen und ein entsprechendes Temperatursignal zu erzeugen. Die Steuereinheit ist in dieser Ausführungsform ausgebildet, den Strom zusätzlich in Abhängigkeit des Temperatursignals zu begrenzen.

Vorteilhaft braucht mit der so ausgebildeten Steuereinheit die im Zwischenkreis nach Abtrennen der Batterie von dem Zwischenkreis verbleibende elektrische Energie nicht in Abhängigkeit des Entladesignals in ein ausgangsseitig mit dem Spannungswandler verbundenes Niedervoltnetz eingespeist zu werden. Ob die im Zwischenkreis gespeicherte elektrische Energie in das Niedervoltnetz mittels des Spannungswandlers eingespeist wird, hängt dann vom Zustand der mit dem Spannungswandler ausgangsseitig verbundenen, in das Niedervoltnetz eingebundenen Verbraucher ab. Wenn beispielweise eine mit dem Niedervoltnetz verbundene Batterie nicht vollgeladen ist, so kann zusätzlich zu dem vorab beschriebenen, mittels Begrenzung des magnetischen Flusses kontrollierten Abbau der elektrischen Energie des Zwischenkreises wenigstens ein Teil der elektrischen Energie des Zwischenkreises über den Spannungswandler in das Niedervoltnetz und dort in die noch nicht vollgeladene Niedervoltbatterie eingespeist werden.

Bevorzugt weist der Spannungswandler einen Stromsensor auf, wobei der Stromsensor ausgebildet ist, den Strom zu erfassen und ein den Strom repräsentierendes Stromsignal zu erzeugen. Der Spannungswandler ist bevorzugt weiter ausgebildet, die Arbeitsfrequenz in Abhängigkeit des Stromsignals einzustellen. Das Stromsignal kann beispielsweise durch eine Spannung gebildet sein, welche über einem als Shunt-Widerstand ausgebildeten Stromsensor abfällt. In einer anderen Ausführungsform ist der Stromsensor durch einen Übertrager gebildet, wobei eine Primärspule des Übertragers seriell mit einer Primärspule des Transformators verbunden ist.

In einer bevorzugten Ausführungsform weist die Steuereinheit einen steuerbar ausgebildeten Trennschalter auf. Der Trennschalter weist bevorzugt einen Anschluss für eine elektrische Batterie und einen Anschluss für den Zwischenkreiskondensator auf. Die Steuereinheit ist bevorzugt ausgebildet, ein Trennsignal in Abhängigkeit des Entladesignals zu erzeugen und an den Trennschalter zum Trennen der Batterie von dem wenigstens einen Zwischenkreiskondensator zu senden. Der Trennschalter ist bevorzugt ausgebildet, in Abhängigkeit des Trennsignals den Anschluss für die Batterie von dem Anschluss für den Zwischenkreiskondensator zu trennen. Der Trennschalter ist beispielsweise als Relais oder als Halbleiterschalter ausgebildet.

Die Erfindung betrifft auch eine Schaltungsanordnung für ein Fahrzeug mit einem elektrischen Antrieb. Das Fahrzeug ist beispielsweise ein Elektrofahrzeug oder ein Hybridfahrzeug. Ein Hybridfahrzeug weist bevorzugt zusätzlich zu dem elektrischen Antrieb einen Antrieb mit einem Verbrennungsmotor auf.

Bevorzugt weist die Schaltungsanordnung eine Steuereinheit gemäß der vorbeschriebenen Art auf. Bevorzugt weist die Schaltungsanordnung den wenigstens einen Zwischenkreiskondensator auf, wobei der Zwischenkreiskondensator mit dem Eingang für das Gleichspannungsnetz verbunden ist. Der Eingang für das Gleichspannungsnetz ist bevorzugt über den Trennschalter mit dem Anschluss für die Batterie verbunden.

Bevorzugt ist die Batterie Bestandteil der Schaltungsanordnung und ist mit dem Anschluss für die Batterie verbunden. So kann vorteilhaft die Batterie in Abhängigkeit des Trennsignals von dem Eingang für das Gleichspannungsnetz - und so auch von dem Zwischenkreiskondensator - getrennt werden. Die im Zwischenkreis verbleibende elektrische Energie wird so auf die in dem Zwischenkreiskondensator und weiteren kapazitiven Elementen des Zwischenkreises gespeicherte Energie beschränkt. Diese im Zwischenkreis verbleibende Energie kann vorteilhaft in Abhängigkeit des Entladesignals über die Steuereinheit, insbesondere den Spannungswandler, wenigstens teilweise entladen werden, bis eine für einen Menschen ungefährliche Spannung im Zwischenkreiskondensator verbleibt.

Bevorzugt weist die Schaltungsanordnung einen Motorhaubenschalter auf. Der Motorhaubenschalter ist bevorzugt mit dem Eingang für das Entladesignal verbunden. Der Motorhaubenschalter ist bevorzugt ausgebildet, das Entladesignal in Abhängigkeit eines Öffnens einer Motorhaube des Fahrzeugs zu erzeugen. So kann vorteilhaft beim Öffnen einer Motorhaube durch einen Benutzer, oder zum Durchführen einer Wartung oder einer Reparatur des Fahrzeugs, die im Zwischenkreis gespeicherte elektrische Energie vorteilhaft schnell über den Wechselrichter abgebaut werden. Der Benutzer des Fahrzeugs - oder ein Servicepersonal - kann so vorteilhaft beim Untersuchen oder beim Reparieren des Fahrzeugs keinen elektrischen Schlag von der Zwischenkreisspannung erhalten.

Das Erzeugen des Entladesignals mittels des Motorhaubenschalters ist beispielsweise weiter vorteilhaft bei einem Brand des Fahrzeugs im Motorraum. Wenn nämlich die Motorhaube durch einen Retter oder ein Feuerwehrpersonal geöffnet wird, um einen Brand im Motorraum des Fahrzeugs zu löschen, so könnte das Feuerwehrpersonal über ein Löschwasser, welches mit dem Zwischenkreis oder elektrischen Komponenten des Zwischenkreises in Berührung gerät, einen elektrischen Schlag erhalten.

Unabhängig oder zusätzlich zu dem Motorhaubenschalter kann die Schaltungsanordnung einen Brandsensor aufweisen. Der Brandsensor ist ausgebildet, Rauchgas zu erfassen und in Abhängigkeit des erfassten Rauchgases das Entladesignal zu erzeugen und ausgangsseitig ausgeben. Der Rauchgassensor ist ausgangsseitig mit dem Eingang für das Entladesignal verbunden.

In einer bevorzugten Ausführungsform weist die Schaltungsanordnung einen mit dem Eingang für das Entladesignal wirkverbundenen, bevorzugt mittels eines Schlüssels bedienbar ausgebildeten Hauptschalter für das Fahrzeug, insbesondere Elektrofahrzug auf. Der Hauptschalter ist mit dem Eingang für das Entladesignal derart wirkverbunden, dass bei ausgeschaltetem Hauptschalter das Entladesignal erzeugt wird. Dadurch wird vorteilhaft beim Abstellen des Elektrofahrzeugs ein Entladen des Zwischenkreises bewirkt, so dass das Elektrofahrzeug vorteilhaft mit - bevorzugt mindestens bis zu einer ungefährlichen Spannung herab - entladenen Zwischenkreis abgestellt oder geparkt werden kann.

In einer bevorzugten Ausführungsform der Schaltungsanordnung weist die Schaltungsanordnung einen mit dem Eingang für das Entladesignal verbundenen Unfallsensor auf. Der Unfallsensor ist ausgebildet, das Entladesignal in Abhängigkeit einer auf den Unfallsensor wirkenden Beschleunigung zu erfassen und das Entladesignal in Abhängigkeit der Beschleunigung zu erzeugen. Der Unfallsensor kann beispielsweise durch einen Beschleunigungssensor eines Airbags gebildet sein.

Die Erfindung betrifft auch ein Kraftfahrzeug mit einem elektrischen Antrieb mit einer Steuereinheit der vorgeschriebenen Art oder mit einer Schaltungsanordnung der vorbeschriebenen Art.

Die Erfindung betrifft auch ein Verfahren zum Entladen eines Zwischenkreiskondensators einer Schaltungsanordnung für ein Elektrofahrzeug oder ein Hybridfahrzeug. Bei dem Verfahren zum Entladen eines Zwischenkreiskondensators einer Schaltungsanordnung umfassend einen mit dem Zwischenkreiskondensator verbundenen Spannungswandler wird ein Entladesignal erzeugt und in Abgängigkeit des Entladesignals eine mit dem Zwischenkreis verbundene Batterie von dem Zwischenkreiskondensator getrennt. Bevorzugt wird bei dem Verfahren eine Arbeitsfrequenz eines Wechselrichters des Spannungswandlers - im Vergleich zu keinem Entladesignal - verkleinert, so dass der Zwischenkreiskondensator über den Wechselrichter, - schneller als ohne Entladesignal - entladen wird.

Bevorzugt wird bei dem Verfahren ein Strom durch den Wechselrichter in Abhängigkeit eines magnetischen Flusses in einem mit einem Ausgang des Wechselrichters verbundenen Transformator begrenzt.

Bevorzugt wird bei dem Verfahren das Entladesignal in Abhängigkeit eines Öffnens einer Motorhaube eines Elektrofahrzeuges, in Abhängigkeit eines einen Unfall des Elektrofahrzeuges repräsentierenden Beschleunigungssignals oder in Abhängigkeit eines einen Brand des Elektrofahrzeugs repräsentierenden Alarmsignals, oder in Abhängigkeit eines von einem - bevorzugt mittels eines Schlüssels bedienbar ausgebildeten - Hauptschalter eines Elektrofahrzeugs ein Abschalten des Elektrofahrzeugs repräsentierenden Abschaltsignals erzeugt.

Die Erfindung wird nun im Folgenden anhand von Figuren und weiteren Ausführungsbeispielen beschrieben. Weitere vorteilhafte Ausführungsvarianten ergeben sich aus den in den abhängigen Ansprüchen und in den Figuren beschriebenen Merkmalen.
Figur 1 zeigt - schematisch - ein Ausführungsbeispiel für eine Schaltungsanordnung eines Teils eines Bordnetzes für ein Elektrofahrzeug;
Figur 2 zeigt - teilweise schematisch - eine Schaltungsanordnung für einen Spannungswandler für ein Elektrofahrzeug;
Figur 3 zeigt ein Diagramm mit zeitlichen Signalverläufen von Signalen, die beim Betrieb des in Figur 2 gezeigten Spannungswandlers erfasst worden sind.

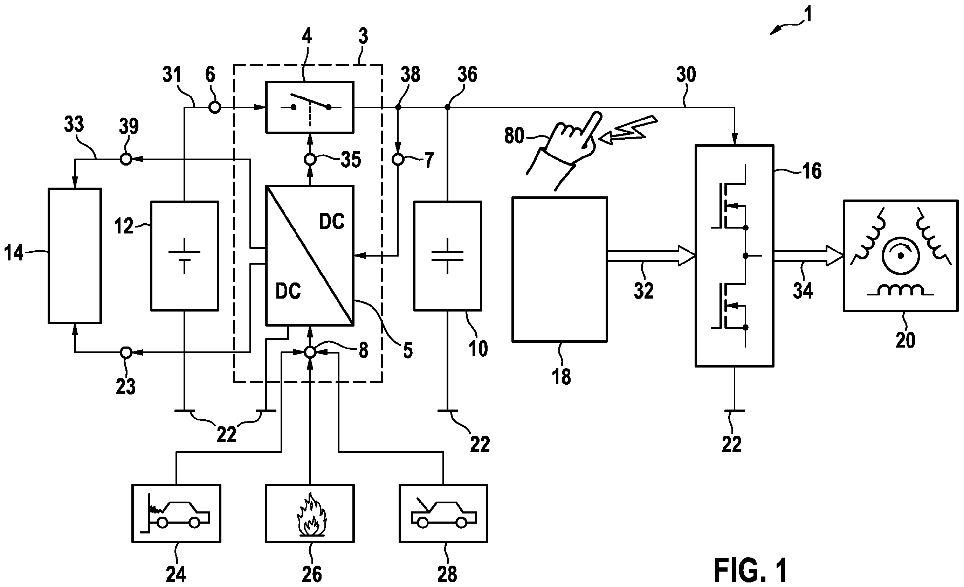

Figur 1 zeigt ein Ausführungsbeispiel für eine Schaltungsanordnung 1. Die Schaltungsanordnung 1 zeigt eine Steuereinheit 3 umfassend einen Spannungswandler 5 und einen Trennschalter 4, welcher in diesem Ausführungsbeispiel mit einem Hochvolt-Netz und mit einem Niedervolt-Netz für ein Kraftfahrzeug zusammenwirkt. Der Spannungswandler 5 weist einen Eingang 7 für ein Gleichspannungsnetz, insbesondere eine Zwischenkreisspannung des Gleichspannungs-Netzes auf. Das Gleichspannungsnetz wird im Folgenden auch Hochvolt-Netz genannt.

Das Hochvolt-Netz wird von einer Hochvolt-Batterie 12 gespeist. Die Hochvolt-Batterie 12 ist beispielsweise als Akkumulator ausgebildet, insbesondere als Lithium-lonen-Akkumulator, als Natrium-Schwefel-Akkumulator oder als BleiAkkumulator. Eine Spannung der Hochvolt-Batterie beträgt im vollgeladenen Zustand beispielsweise zwischen 200 und 500 Volt. Die Hochvolt-Batterie 12 ist mit einem Pluspol über eine Verbindungsleitung 31 mit einem Anschluss 6 des Trennschalters 4 für die Batterie verbunden.

Der Trennschalter 4 ist steuerbar ausgebildet und ist eingangsseitig mit einem Steuerausgang 35 des Spannungswandlers 5 verbunden. Ein weiterer Anschluss des Trennschalters 4 ist mit einem Verbindungsknoten 38 verbunden, welcher mit dem Eingang 7 verbunden ist. Der Verbindungsknoten 38 ist über eine Verbindungsleitung 30 mit einer Leistungsendstufe 16 einer elektrischen Maschine 20 verbunden.

Die elektrische Maschine 20 ist beispielsweise Bestandteil eines Antriebs für ein Elektrofahrzeug, umfassend die elektrische Maschine, die Leistungsendstufe 16 und eine Verarbeitungseinheit 18. Die Leistungsendstufe 16 umfasst beispielsweise für jede Statorspule eines Stators der elektrischen Maschine 20 eine Transistor-Halbbrücke. Die Leistungsendstufe 16 ist auch mit einem Masseanschluss 22 des Hochvolt-Netzes verbunden. Die Leistungsendstufe 16, insbesondere Steueranschlüsse der Halbbrücken der Leistungsendstufe 16, sind eingangsseitig über eine Verbindung 32 mit der Verarbeitungseinheit 18 verbunden.

Die Verarbeitungseinheit 18 ist beispielsweise durch einen Mikrocontroller oder ein FPGA (FPGA = Field-Programmable-Gate-Array) gebildet. Die Verarbeitungseinheit 18 ist ausgebildet, die Leistungsendstufe 16 zum Bestromen des Stators der elektrischen Maschine 20 und so zum Erzeugen eines magnetischen Drehfeldes zum Drehbewegen eines Rotors der elektrischen Maschine 20 anzusteuern. Die Verbindungsleitung 30 ist über einen Verbindungsknoten 36 mit einem Zwischenkreiskondensator 10 verbunden.

Der Zwischenkreiskondensator ist mit einem weiteren Anschluss mit dem Masseanschluss 22 verbunden. Der Zwischenkreiskondensator 10 ist ausgebildet, elektrische Energie mit einer Spannung des Hochvolt-Netzes zu speichern. Der Spannungswandler 5 ist ausgangsseitig über einen Ausgang 39 und weiter über eine Verbindungsleitung 33 mit einem Niedervolt-Netz 14 verbunden. Der Spannungswandler 5 ist auch ausgangsseitig über einen Masseanschluss 23 mit dem Niedervolt-Netz 14 verbunden. Der Spannungswandler 5 ist beispielsweise ausgebildet, das Hochvolt-Netz und das Niedervolt-Netz 14 voneinander galvanisch getrennt zu halten. Dazu ist der Transformator 54 beispielsweise als Trenntransformator ausgebildet. So ist der Masseanschluss 23 dann von dem Masseanschluss 22 galvanisch getrennt.

Der Spannungswandler 5 weist einen Eingang 8 für ein Entladesignal auf. Der Eingang 8 ist in diesem Ausführungsbeispiel mit einem Motorhaubenschalter 28, einem Brandsensor 26 und einem Unfallsensor, insbesondere einem Beschleunigungssensor 24, verbunden. Der Beschleunigungssensor 24 ist ausgebildet, ein Beschleunigungssignal zu erzeugen, das einen Unfall repräsentiert und dieses als Entladesignal am Eingang 8 zur Verfügung zu stellen. Der Brandsensor 26 ist ausgebildet, ein Ausgangssignal zu erzeugen, das einen Brand, insbesondere eines Fahrzeuges repräsentiert und dieses ausgangsseitig am Eingang 8 als Entladesignal zur Verfügung zu stellen.

Der Motorhaubenschalter 28 ist ausgebildet, ein Ausgangssignal zu erzeugen, welches ein Öffnen einer Motorhaube des Kraftfahrzeuges repräsentiert und dieses als Entladesignal am Eingang 8 zur Verfügung zu stellen. Der Spannungswandler 5 ist ausgebildet, in Abhängigkeit des am Eingang 8 empfangenen Entladesignals ein Trennsignal zu erzeugen und dieses am Ausgang 35 an den Trennschalter 4 zu senden. Der Trennschalter 4 kann dann in Abhängigkeit des Trennsignals die Hochvolt-Batterie 12 von dem Zwischenkreis trennen. Die Leistungsendstufe 16 ist dann in diesem Fall nur noch mit dem Spannungswandler 5 über den Eingang 7 und mit dem Zwischenkreiskondensator 10 verbunden.

Der Spannungswandler kann in einer nicht dargestellten Ausführungsform auch mit dem Eingang 8 mit einem Hauptschalter oder Zündschloss derart wirkverbunden sein, dass bei ausgeschaltetem Hauptschalter beziehungsweise ausgeschalteter Zündung ein Entladesignal erzeugt wird und ein Entladen des Zwischenkreises bewirkt.

Dargestellt ist auch eine Hand 80 eines Benutzers, welche die Verbindungsleitung 30 oder einen mit der Verbindungsleitung 30 verbundenen elektrischen Anschluss berühren kann. Das kann beispielsweise nach einem Unfall, welcher durch den Beschleunigungssensor 24 erfasst wird, nach einem Brand des Kraftfahrzeuges, bei dem die Hand 80 über ein Löschwasser mit der Verbindungsleitung 30 in elektrischen Wirkkontakt gerät, oder nach einem Öffnen der Motorhaube, erfasst durch den Motorhaubenschalter 28, nachdem die Hand 80 durch ein Berühren der Verbindungsleitung 30 mit der Zwischenkreisspannung in Kontakt geraten kann, geschehen.

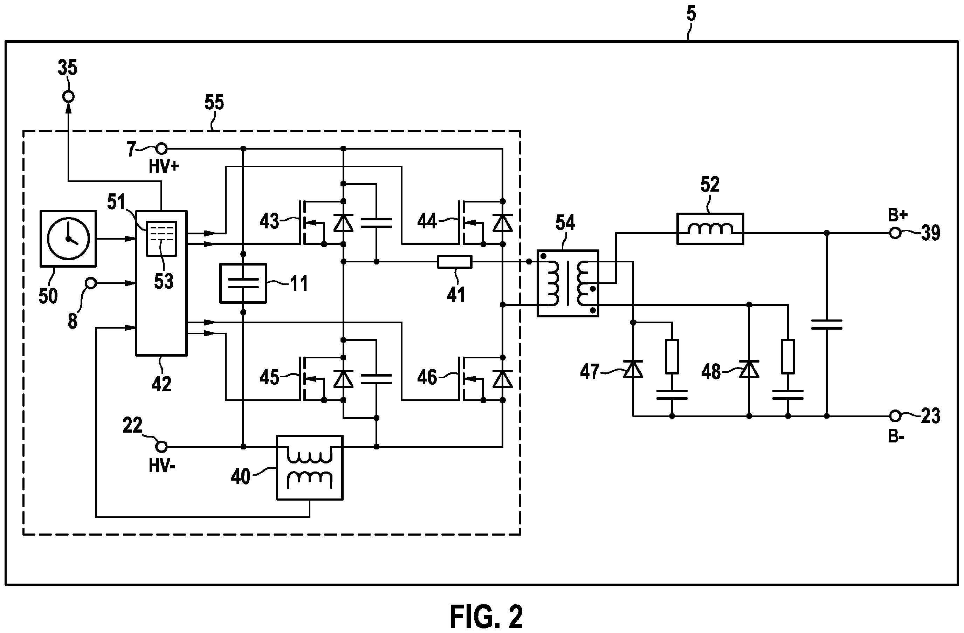

Der Spannungswandler 5 ist weiter ausgebildet, in Abhängigkeit des am Eingang 8 empfangenen Entladesignals den Zwischenkreiskondensator 10 und weitere, mit der Verbindungsleitung 30 verbundene Kapazitäten, wie auch die durch die Verbindungsleitung 30 selbst gebildete Kapazität, über den Eingang 7 zum Masseanschluss 22 hin zu entladen. Dazu kann der Spannungswandler 5 einen - im Folgenden in Figur 2 beispielhaft näher dargestellten Wechselrichter - mit einer zum Entladen des Zwischenkreiskondensators 10 ausgebildeten Taktfrequenz derart ansteuern, dass der Entladestrom über den Wechselrichter und über einen mit dem Wechselrichter ausgangsseitig verbundenen Transformator maximal ist, wobei ein Sättigungsstrom, der eine Sättigung des Magnetflusses im Transformator repräsentiert, vorteilhaft nicht überschritten werden kann.

Figur 2 zeigt eine Schaltungsanordnung des in Figur 1 bereits dargestellten Spannungswandlers 5. Der Spannungswandler 5 weist einen Wechselrichter 55 mit einer Verarbeitungseinheit 42 auf, welche beispielsweise als FPGA, als Mikrocontroller oder als Mikroprozessor ausgebildet ist. Die Verarbeitungseinheit 42 ist ausgangsseitig mit Steueranschlüssen von Schalt-Transistoren des bereits erwähnten Wechselrichters verbunden. Die Schalt-Transistoren 43 und 45 bilden dabei gemeinsam eine Halbbrücke, welche ausgangsseitig mit einem ersten Anschluss einer Primärwicklung eines Transformators 54 verbunden ist. Der Spannungswandler umfasst auch zwei Schalt-Transistoren 44 und 46, welche gemeinsam eine Halbbrücke bilden, die ausgangsseitig mit einem zweiten Anschluss der Primärwicklung des Transformators 54 verbunden ist. Die Schalt-Transistoren 43 und 44 sind jeweils ausgebildet, ein positives Hochvoltpotential, welches an dem Eingang 7 - geschaltet durch den in Figur 1 dargestellten Trennschalter- anliegt, gesteuert durch Steuersignale der Verarbeitungseinheit 42 auf die Primärwicklung des Transformators 54 zu schalten.

Die Schalt-Transistoren 43 und 44 bilden somit High-Side-Transistoren, die Transistoren 45 und 46 bilden jeweils Low-Side-Transistoren des Wechselrichters 55 und sind jeweils ausgebildet, in Abhängigkeit von eingangsseitig empfangenen, von der Verarbeitungseinheit 42 erzeugten Steuersignalen den zweiten Anschluss der Primärwicklung des Transformators 54 mit dem Masseanschluss 22 des Hochvolt-Netzes zu verbinden.

Die Transistoren 43, 44, 45 und 46 sind beispielsweise jeweils als FeldeffektTransistor oder IGBT (IGBT = Insulated-Gate-Bipolar-Transistor) ausgebildet.

Der Wechselrichter 55 umfasst auch einen Stützkondensator 11, welcher mit dem Eingang 7 und mit dem Masseanschluss 22 verbunden ist. Die Verarbeitungseinheit 42 ist eingangsseitig mit dem in Figur 1 bereits beschriebenen Eingang 8 für das Entladesignal verbunden. Die Verarbeitungseinheit 42 ist auch eingangsseitig mit einem Zeitgeber 50 verbunden, welcher ausgebildet ist, ein Schaltsignal - als Zeitbasis zum Ansteuern der Schalt-Transistoren 43, 44, 45 und 46 - zu erzeugen und der Verarbeitungseinheit 42 eingangsseitig zur Verfügung zu stellen. Die Verarbeitungseinheit 42 ist ausgebildet, die Schalt-Transistoren 43, 44, 45 und 46 in Abhängigkeit des vom Zeitgeber 50 empfangenen Schaltsignals zum Erzeugen einer Wechselspannung anzusteuern. Die Frequenz der Wechselspannung beträgt beispielsweise 100 Kilohertz. Die Verarbeitungseinheit 42 ist ausgebildet, in Abhängigkeit des am Eingang 8 empfangenen Entladesignals die von dem Zeitgeber 50 empfangene Frequenz zu teilen, insbesondere abwärts zu teilen, sodass die geteilte Frequenz kleiner ist als die von dem Zeitgeber 50 erzeugte Frequenz des Schaltsignals. Die Verarbeitungseinheit 42 ist weiter ausgebildet, in Abhängigkeit des Entladesignals den Wechselrichter, insbesondere die Schalt-Transistoren 43, 44, 45 und 46 zum Erzeugen einer Wechselspannung mit der geteilten Frequenz anzusteuern.

Der Wechselrichter 55 umfasst in diesem Ausführungsbeispiel einen Stromsensor 40, welcher in diesem Ausführungsbeispiel als Übertrager gebildet ist. Der Stromsensor 40 verbindet Source-Anschlüsse der Schalt-Transistoren 45 und 46 mit dem Masseanschluss 22. Dargestellt ist auch ein Stromsensor 41, welcher als Shunt-Widerstand ausgebildet ist. Der Stromsensor 41 kann zusätzlich oder unabhängig vom Stromsensor 40 Bestandteil des Wechselrichters 55 sein. Der Stromsensor 41 verbindet den Ausgang der Halbbrücke, gebildet durch die Schalt-Transistoren 43 und 45 mit dem ersten Anschluss der Primärspule des Transformators 54. Die Verarbeitungseinheit 42 ist ausgebildet, in Abhängigkeit des von dem Stromsensor 40 empfangenen Stromsignals und in Abhängigkeit des am Eingang 8 empfangenen Entladesignals, die geteilte Frequenz zum Ansteuern der Schalt-Transistoren 43, 44, 45 und 46 derart zu erzeugen, dass ein vorbestimmter Schwellwert des mittels des Stromsensors 40 erfassten Stromes nicht überschritten wird. Der Schwellwert des Stromes entspricht beispielsweise einer Sättigung des magnetischen Flusses im Transformator 54. Der Transformator 54 ist ausgangsseitig über eine Sekundärwicklung mit einem Gleichrichter verbunden. Der Gleichrichter ist in diesem Ausführungsbeispiel durch zwei Dioden 47 und 48 gebildet. Der Gleichrichter kann in einer anderen Ausführungsform als Brückengleichrichter ausgebildet sein. Anstelle des dargestellten Gleichrichters kann ein Current-Doubler mit aktiver oder passiver Gleichrichtung mit dem Transformator verbunden sein. Der Spannungswandler umfasst sekundärseitig auch eine Induktivität 52, welche mit einem Abgriff, insbesondere Mittelabgriff der Sekundärwicklung des Transformators 54 verbunden ist. Die Induktivität 52 verbindet den Mittelabgriff mit einem Ausgang 39, welcher - wie in Figur 1 dargestellt - mit dem Niedervolt-Netz 14 verbunden ist. Die Sekundärwicklung des Transformators 54 weist zusätzlich zu dem bereits erwähnten Mittelabgriff zwei Anschlüsse auf, wobei ein erster Anschluss über die Diode 47 und der zweite Anschluss über die Diode 48 mit einem Masseanschluss 23 für das Niedervolt-Netz verbunden sind.

Die Verarbeitungseinheit 42 kann in einer anderen Ausführungsform ausgebildet sein, den Strom durch die Primärwicklung des Transformators 54 mittels Pulsweitenmodulation der mittels der Transistor-Halbbrücken erzeugten Halbwellen zu begrenzen.

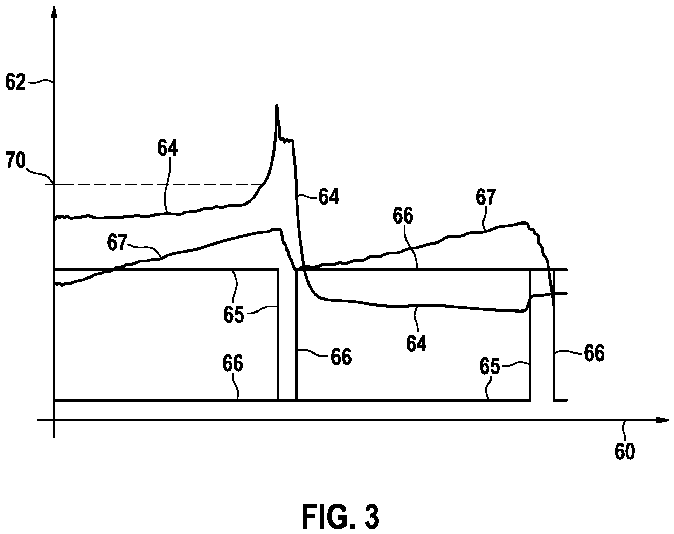

Figur 3 zeigt ein Diagramm mit einer Zeitachse 60 und einer Amplitudenachse 62. Dargestellt sind Zeitsignale, welche von dem in den Figuren 1 und 2 dargestellten Wechselrichter 5 erzeugt worden sind. Dargestellt ist eine Kurve 64, welche den von dem Stromsensor 40 in Figur 2 erfassten Strom repräsentiert. Gestrichelt dargestellt ist auch ein Schwellwert 70 des Stromes 64, welcher beispielsweise in der in Figur 2 dargestellten Verarbeitungseinheit 42 als vorbestimmter Stromwert - repräsentiert durch einen Datensatz 53 - in einem Speicher 51 der Verarbeitungseinheit 42 repräsentiert ist.

Dargestellt ist auch eine Kurve 67, welche einen Strom durch die Induktivität 52 in Figur 2 repräsentiert.

Eine Kurve 65 repräsentiert eine Ausgangsspannung der Transistor-Halbbrücke umfassend die Schalttransistoren 43 und 45, eine Kurve 66 repräsentiert eine Ausgangsspannung der Halbbrücke, gebildet durch die Transistoren 44 und 46.

## Patentansprüche

1. Steuereinheit (3) für ein Kraftfahrzeug,
und die Steuereinheit (3) einen Spannungswandler (5) aufweist, welcher einen Eingang (7) für ein Gleichspannungsnetz (10, 12, 16) aufweist und der Spannungswandler (ausgebildet ist, ausgangsseitig eine Gleichspannung kleiner als eine Eingangsspannung am Eingang (7) für das Gleichspannungsnetz zu erzeugen und die Gleichspannung ausgangsseitig auszugeben,
**dadurch gekennzeichnet, dass**
der Spannungswandler (5) einen Wechselrichter (55) und einen ausgangsseitig mit dem Wechselrichter (55) verbundenen Transformator (54) aufweist und einen Eingang (8) für ein Entladesignal aufweist, und der Spannungswandler (5) ausgebildet ist, in Abhängigkeit des Entladesignals einen mit dem Eingang (7) für das Gleichspannungsnetz verbundenen Zwischenkreiskondensator (10) über den Wechselrichter (55) zu entladen und dazu eine Arbeitsfrequenz des Wechselrichters (55) im Vergleich zu keinem Entladesignal zu verkleinern.

2. Steuereinheit (3) nach Anspruch 1,
**dadurch gekennzeichnet, dass**
die Steuereinheit (3) ausgebildet ist, die Arbeitsfrequenz des Wechselrichters (55) wenigstens zu halbieren.

3. Steuereinheit (3) nach Anspruch 1 oder 2,
**dadurch gekennzeichnet, dass**
der Spannungswandler (5) ausgebildet ist, einen von dem Wechselrichter (55) auf den Transformator (54) geschalteten Strom (64) in Abhängigkeit eines magnetischen Flusses in dem Transformator (54), insbesondere in Abhängigkeit einer Sättigung des magnetischen Flusses in dem Transformator (54), zu begrenzen.

4. Steuereinheit (3) nach einem der vorhergehenden Ansprüche,
**dadurch gekennzeichnet, dass**
die Steuereinheit (3) einen steuerbar ausgebildeten Trennschalter (4) aufweist, welcher einen Anschluss (6) für eine elektrische Batterie (12) und einen Anschluss für einen Zwischenkreiskondensator (10) aufweist und die Steuereinheit (3) ausgebildet ist, ein Trennsignal in Abhängigkeit des Entladesignals zu erzeugen und an den Trennschalter (4) zum Trennen der Batterie (12) von dem wenigstens einen Zwischenkreiskondensator (10) zu senden.

5. Schaltungsanordnung (1) für ein Fahrzeug mit einem elektrischen Antrieb (16, 18, 20), mit einer Steuereinheit (3) nach Anspruch 4,
und mit dem Zwischenkreiskondensator (10), wobei der Zwischenkreiskondensator (10) mit dem Eingang (7) für das Gleichspannungsnetz verbunden ist und der Eingang (7) für das Gleichspannungsnetz über den Trennschalter (4) mit dem Anschluss (6) für die Batterie (12) verbunden ist.

6. Schaltungsanordnung (1) nach Anspruch 5,
**dadurch gekennzeichnet, dass**
die Schaltungsanordnung (1) einen mit dem Eingang (8) für das Entladesignal verbundenen Motorhaubenschalter (28) aufweist, welcher ausgebildet ist, das Entladesignal in Abhängigkeit eines Öffnens einer Motorhaube des Fahrzeugs zu erzeugen.

7. Schaltungsanordnung (1) nach Anspruch 5 oder 6,
**dadurch gekennzeichnet, dass**
die Schaltungsanordnung (1) einen mit dem Eingang (8) für das Entladesignal verbundenen Unfallsensor (24) aufweist, welcher ausgebildet ist, das Entladesignal in Abhängigkeit einer auf den Unfallsensor (24) wirkenden Beschleunigung zu erfassen und das Entladesignal in Abhängigkeit der Beschleunigung zu erzeugen.

8. Kraftfahrzeug mit einem elektrischen Antrieb (16, 18, 10) mit einer Steuereinheit nach einem der Ansprüche 1 bis 4 oder einer Schaltungsanordnung nach einem der Ansprüche 5 bis 7.

9. Verfahren zum Entladen eines Zwischenkreiskondensators (10) einer Schaltungsanordnung (1) für ein Elektro- oder Hybridfahrzeug umfassend einen mit dem Zwischenkreiskondensator (10) verbundenen Spannungswandler (5),
**dadurch gekennzeichnet, dass**
der Spannungswandler einen Eingang für ein Gleichspannungsnetz aufweist und ausgebildet ist, eine Gleichspannung kleiner als eine Eingangsspannung am Eingang für das Gleichspannungsnetz zu erzeugen und die Gleichspannung ausgangsseitig auszugeben, wobei bei dem Verfahren ein Entladesignal erzeugt wird und in Abgängigkeit des Entladesignals eine Arbeitsfrequenz eines Wechselrichters (55) des Spannungswandlers (5) im Vergleich zu keinem Entladesignal verkleinert wird, wobei mit dem Wechselrichter ausgangsseitig ein Transformator verbunden ist, so dass der Zwischenkreiskondensator (10) über den Wechselrichter (55) schneller entladen wird als ohne Entladesignal.

10. Verfahren nach Anspruch 9,
bei dem ein Strom (64) durch den Wechselrichter (55) in Abhängigkeit eines magnetischen Flusses in dem mit einem Ausgang des Wechselrichters (55) verbundenen Transformator (54) begrenzt wird.

11. Verfahren nach Anspruch 9 oder 10,
bei dem das Entladesignal in Abhängigkeit eines Öffnens einer Motorhaube eines Elektrofahrzeuges, in Abhängigkeit eines einen Unfall repräsentierenden Beschleunigungssignals oder in Abhängigkeit eines einen Brand des Fahrzeugs repräsentierenden Alarmsignals erzeugt wird.

## Claims

1. Control unit (3) for a motor vehicle,
and the control unit (3) comprises a voltage converter (5) that comprises an input (7) for a direct voltage supply system (10, 12, 16) and the voltage converter is designed so as to generate on the output side a direct voltage that is less than an input voltage at the input (7) for the direct voltage supply system and to output the direct voltage on the output side,
**characterized in that**
the voltage converter (5) comprises an inverter (55) and a transformer (54) that is connected on the output side to the inverter (55), and comprises an input (8) for a discharge signal, and the voltage converter (5) is designed so as in response to the discharge signal to discharge by way of the inverter (55) an intermediate circuit capacitor (10) that is connected to the input (7) for the direct voltage supply system and for this purpose to reduce a working frequency of the inverter (55) in comparison to when a discharge signal is not provided.

2. Control unit (3) according to Claim 1,
**characterized in that**
the control unit (3) is designed so as at least to halve the working frequency of the inverter (55).

3. Control unit (3) according to Claim 1 or 2,
**characterized in that**
the voltage converter (5) is designed so as in response to a magnetic flux in the transformer (54), in particular in response to a saturation of the magnetic flux in the transformer (54), to limit a current (64) that is switched from the inverter (55) to the transformer (54).

4. Control unit (3) according to any one of the preceding claims,
**characterized in that**
the control unit (3) comprises a controllable disconnecting switch (4) that comprises a connection (6) for an electric battery (12) and a connection for an intermediate circuit capacitor (10) and the control unit (3) is designed so as in response to the discharge signal to generate a disconnection signal and to transmit said disconnection signal to the disconnecting switch (4) in order to disconnect the battery (12) from the at least one intermediate circuit capacitor (10).

5. Switching arrangement (1) for a vehicle having an electric drive (16, 18, 20) having a control unit (3) according to Claim 4,
and having the intermediate circuit capacitor (10), wherein the intermediate circuit capacitor (10) is connected to the input (7) for the direct voltage supply system and the input (7) for the direct voltage supply system is connected by way of the disconnecting switch (4) to the connection (6) for the battery (12).

6. Switching arrangement (1) according to Claim 5,
**characterized in that**
the switching arrangement (1) comprises an engine hood switch (28) that is connected to the input (8) for the discharge signal, which engine hood switch is designed so as to generate the discharge signal in response to an engine hood of the vehicle being opened.

7. Switching arrangement (1) according to Claim 5 or 6,
**characterized in that**
the switching arrangement (1) comprises an accident sensor (24) that is connected to the input (8) for the discharge signal, which accident sensor is designed so as in response to an acceleration acting upon the accident sensor (24) to detect the discharge signal and in response to the acceleration to generate the discharge signal.

8. Motor vehicle having an electric drive (16, 18, 10) having a control unit according to any one of Claims 1 to 4 or a switching arrangement according to any one of Claims 5 to 7.

9. Method for discharging an intermediate circuit capacitor (10) of a switching arrangement (1) for an electric vehicle or a hybrid vehicle comprising a voltage converter (5) that is connected to the intermediate circuit capacitor (10),
**characterized in that**
the voltage converter comprises an input for a direct voltage supply system and is designed so as to generate a direct voltage that is less than an input voltage at the input for the direct voltage supply system and to output the direct voltage on the output side, wherein in the method a discharge signal is generated and in response to the discharge signal a working frequency of an inverter (55) of the voltage converter (5) is reduced in comparison to when a discharge signal is not provided, wherein a transformer is connected to the inverter on the output side, so that the intermediate circuit capacitor (10) is discharged by way of the inverter (55) more rapidly than when a discharge signal is not provided.

10. Method according to Claim 9,
wherein a current (64) is limited by means of the inverter (55) in response to a magnetic flux in the transformer (54) that is connected to an output of the inverter (55).

11. Method according to Claim 9 or 10,
wherein the discharge signal is generated in response to an engine hood of an electric vehicle being opened, in response to an acceleration signal that represents an accident and in response to an alarm signal that represents a fire on board a vehicle.

## Revendications

1. Unité de commande (3) pour un véhicule automobile,
l'unité de commande (3) comportant un convertisseur de tension (5) qui comporte une entrée (7) destinée à un réseau à courant continu (10, 12, 16) et le convertisseur de tension étant conçu pour générer en sortie une tension continue inférieure à une tension d'entrée sur l'entrée (7) destinée au réseau à tension continue et pour délivrer en sortie une tension continue,
**caractérisée en ce que** le convertisseur de tension (5) comporte un onduleur (55) et un transformateur (54) connecté côté sortie à l'onduleur (55) et **en ce qu'**il comporte une entrée (8) destinée à un signal de décharge, et **en ce que** le convertisseur de tension (5) est conçu pour décharger à travers l'onduleur (55), en fonction du signal de décharge, un condensateur de circuit intermédiaire (10) connecté à l'entrée (7) destinée au réseau à tension continue, et pour ainsi réduire une fréquence de fonctionnement de l'onduleur (55) par comparaison à une absence de signal de décharge.

2. Unité de commande (3) selon la revendication 1,
**caractérisée en ce que** l'unité de commande (3) est conçue pour au moins réduire de moitié la fréquence de fonctionnement de l'onduleur (55).

3. Unité de commande (3) selon la revendication 1 ou 2,
**caractérisée en ce que** le convertisseur de tension (5) est conçu pour limiter un courant (64) envoyé par l'onduleur (55) au transformateur (54) en fonction d'un flux magnétique passant dans le transformateur (54), et plus particulièrement, en fonction d'une saturation du flux magnétique passant dans le transformateur (54).

4. Unité de commande (3) selon l'une quelconque des revendications précédentes,
**caractérisée en ce que** l'unité de commande (3) comporte un disjoncteur (4) qui présente une borne (6) destinée à une batterie électrique (12) et une borne destinée à un condensateur de circuit intermédiaire (10) et **en ce que** l'unité de commande (3) est conçue pour générer un signal de séparation en fonction du signal de décharge et pour l'envoyer au disjoncteur (4) pour séparer la batterie (12) de l'au moins un condensateur de circuit intermédiaire (10).

5. Système de commutation (1) destiné à un véhicule muni d'un système d'entraînement électrique (16, 18, 20), comportant une unité de commande (3) selon la revendication 4,
et comportant le condensateur de circuit intermédiaire (10), dans lequel le condensateur de circuit intermédiaire (10) est connecté à l'entrée (7) destinée au réseau à tension continue et l'entrée (7) destinée au réseau à tension continue est connectée par l'intermédiaire du disjoncteur (4) à la borne (6) destinée à la batterie (12).

6. Système de commutation (1) selon la revendication 5,
**caractérisé en ce que** le système de commutation (1) comporte un commutateur de capot-moteur (28) connecté à l'entrée (8) destinée au signal de décharge, lequel commutateur est conçu pour générer le signal de décharge en fonction d'une ouverture d'un capot-moteur du véhicule.

7. Système de commutation (1) selon la revendication 5 ou 6,
**caractérisé en ce que** le système de commutation (1) comporte un capteur d'accident (24) connecté à l'entrée (8) destinée au signal de décharge, lequel commutateur est conçu pour détecter le signal de décharge en fonction d'une accélération exercée sur le capteur d'accident (24) et pour générer le signal de décharge en fonction de l'accélération.

8. Véhicule automobile comportant un système d'entraînement électrique (16, 18, 10) muni d'une unité de commande selon l'une quelconque des revendications 1 à 4 ou d'un système de commutation selon l'une quelconque des revendications 5 à 7.

9. Procédé pour décharger un condensateur de circuit intermédiaire (10) d'un système de commutation (1) destiné à un véhicule électrique ou hybride muni d'un convertisseur de tension (5) connecté au condensateur de circuit intermédiaire (10),
**caractérisé en ce que** le convertisseur de tension comporte une entrée destinée à un réseau à tension continue et est conçu pour générer une tension continue inférieure à une tension d'entrée sur une entrée destinée au réseau à tension continue et pour délivrer en sortie la tension continue, dans lequel, conformément au procédé, un signal de décharge est généré et une fréquence de fonctionnement d'un onduleur (55) du convertisseur de tension (5) est réduite en fonction du signal de décharge par comparaison à une absence de signal de décharge, dans lequel un transformateur est connecté en entrée à l'onduleur de manière à ce que le condensateur de circuit intermédiaire (10) soit plus rapidement déchargé à travers l'onduleur (55) qu'en l'absence de signal de décharge.

10. Procédé selon la revendication 9,
dans lequel un courant (64) passant dans l'onduleur (55) est limité en fonction d'un flux magnétique passant dans le transformateur (54) connecté à une sortie de l'onduleur (55).

11. Procédé selon la revendication 9 ou 10,
dans lequel le signal de décharge est généré en fonction d'une ouverture d'un capot-moteur d'un véhicule électrique, en fonction d'un signal d'accélération représentant un accident ou en fonction d'un signal d'alarme représentant un incendie du véhicule.
